# FASCICULE DE BREVET EUROPEEN

(11) **EP 1 767 573 B1**
(45) Date de publication et mention de la délivrance du brevet: **01.08.2018**
(21) Numéro de dépôt: 06120348.5
(22) Date de dépôt: 08.09.2006
(51) Int. Cl.: C08K 5/13, C08K 5/17, C08K 5/524, A43B 13/04

(54) **Copolymères à blocs polyamides et blocs polyéthers résistants au vieillissement**
Alterungsbeständige Polyamid-Polyether-Blockcopolymere
Aging resistant polyamide-polyether block copolymers

(30) Priorité: 16.09.2005 FR 0509465
(43) Date de publication de la demande: 28.03.2007
(73) Titulaire: ARKEMA FRANCE, 92700 Colombes (FR)
(72) Inventeur: Malet, Frédéric, 76000, ROUEN (FR)
(74) Mandataire: Hérard, Elise

(56) Documents cités:
- EP-A- 0 608 976
- EP-A1- 0 430 650
- WO-A-2004/037898
- DATABASE WPI Derwent Publications Ltd., London, GB; AN 1987-032940 XP002376016 & JP 61 289119 A (TORAY INDUSTRIES, INC) 19 décembre 1986 (1986-12-19)
- FAUCITANO A ET AL: "Photo-oxidation and Stabilization of Polymers" TRENDS IN POLYMER SCIENCE, ELSEVIER SCIENCE PUBLISHERS B.V. AMSTERDAM, NL, vol. 4, no. 3, mars 1996 (1996-03), pages 92-98, XP004049239 ISSN: 0966-4793

## Description

La présente invention concerne des copolymères à blocs polyamides et blocs polyéthers résistants au vieillissement et plus particulièrement au vieillissement thermique et/ou UV (ultra violet). Les copolymères à blocs polyamides et blocs polyéthers sont aussi appelés polyéther blocs amides (PEBA), ce sont des élastomères thermoplastiques. Ils sont appelés aussi polyamides élastomères. Ces copolymères sont utiles pour faire des objets tels que des semelles de chaussures, de sport en particulier.

Les antériorités ont décrit de nombreux copolymères à blocs polyamides et blocs polyéthers ainsi que de nombreuses utilisations de ces copolymères. Dans ces art antérieurs sont cités des additifs antioxydants et anti UV. Le document JP-61-289119-A1 divulgue des compositions de PEBA additivées avec un ou plus d'un additif pour améliorer la résistance à la lumière et à la chaleur, les stabilisants lumière pouvant être des composés amine encombrés.

Cependant, on constate que de nombreux mélanges d'additifs protégent contre l'oxydation et les UV mais provoquent un jaunissement inesthétique de la composition finale caractérisé par un indice de jaune ou en anglo-saxon "yellow index" abrégé YI.

On a maintenant découvert qu'on ne pouvait pas utiliser n'importe comment n'importe quel antioxydant ni n'importe quel anti UV si l'on souhaitait obtenir une composition avec un faible indice de jaune. En effet, il faut au moins 2 additifs : (a) un antioxydant phénolique et (d) un stabilisant lumière de type amine encombrée ou HALS, abréviation de la dénomination anglosaxonne « Hindered Amine Light Stabilizer », et il faut que ledit HALS soit présent dans la composition dans des proportions bien précises d'autant plus s'il est non méthylé.

La présente invention concerne une composition à base de copolymère PEBA, c'est à dire à blocs polyamides (abrégé blocs PA) homo ou copolyamide, à l'exclusion des blocs PA complètement aromatiques, et à blocs polyéthers(abrégé blocs PE) comprenant :
Composition de copolymère à blocs polyamides (blocs PA) homo ou copolyamide, à l'exclusion des blocs PA complètement aromatiques, et à blocs polyéthers comprenant :
(a) 3000 à 8000 ppm d'au moins un antioxydant phénolique;
(b) 1000 à 2 000 ppm d'au moins un antioxydant à base de phosphore ou à base de soufre;
(c) 1000 à 2 000 ppm d'au moins un absorbeur UV;
(d) 300 à 2 000 ppm d'au moins un stabilisant lumière de type amine encombrée ou HALS, N-méthylé ;
ppm signifiant parties par million de composition totale.

On ne sortirait pas du cadre de l'invention en remplaçant au moins 2 de ces additifs (a) à (d) par un seul additif (a), (b), (c) ou (d) remplissant les mêmes fonctions que lesdits additifs seuls.
Il peut s'agir des fonctions :
- fonction d'antioxydant phénolique (a) ;
- fonction d'antioxydant à base de phosphore ou à base de soufre (b) ;
- fonction d'absorbeur UV (c);
- fonction de stabilisant lumière de type mine encombrée (d).
Par exemple, le Tinuvin 144 remplit à la fois une fonction d'antioxydant phénolique et une fonction de stabilisant lumière de type amine encombrée.

Ces additifs peuvent être introduits dans les copolymères PEBA au cours de leur synthèse ou ultérieurement par mélange à sec ou dans lesdits copolymères PEBA à l'état fondu. Avantageusement, on prépare un mélange maître de ces additifs c'est à dire une résine de préférence de type copolymère PEBA ou copolyamide contenant par exemple 10 à 30% en poids de ces additifs puis on ajoute ce mélange maître à raison de quelques % dans les copolymères PEBA que l'on veut stabiliser. Ce mélange maître peut être fabriqué selon les techniques habituelles des thermoplastiques par introduction des additifs dans les copolymères PEBA à l'état fondu dans une extrudeuse ou tout dispositif équivalent.

Avantageusement la proportion de (a) est comprise entre 3000 et 6000.

Avantageusement la proportion de (b) est comprise entre 1200 et 1700.

Avantageusement la proportion de (c) est comprise entre 1200 et 1700.

Avantageusement la proportion de HALS N-méthylé (d), est comprise entre 400 et 1000 ppm.

Les copolymères PEBA résultent de la copolycondensation de séquences polyamides à extrémités réactives avec des séquences polyéthers à extrémités réactives, lesdites séquences polyamides étant aliphatiques ou semi-aromatiques, les séquences polyamides totalement aromatiques dont il est question dans le document EP-608976, étant expressément exclues de notre invention.

Il s'agit, entre autres de :
1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatiques appelées polyétherdiols.
3) Séquences polyamides à bouts de chaînes dicarboxyliques avec des polyétherdiols, les produits obtenus étant, dans ce cas particulier, des polyétheresteramides. Les copolymères de l'invention sont avantageusement de ce type.

Les séquences polyamides à bouts de chaînes dicarboxyliques proviennent par exemple de la condensation de précurseurs de polyamides en présence d'un diacide carboxylique limiteur de chaîne.

Les séquences polyamides à bouts de chaînes diamines proviennent par exemple de la condensation de précurseurs de polyamides en présence d'une diamine limiteur de chaîne.

Les polymères PEBA peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, des précurseurs de polyamide et un diacide limiteur de chaîne. On obtient un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère.

On peut aussi faire réagir du polyétherdiamine, des précurseurs de polyamide et un diacide limiteur de chaîne. On obtient un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère.

Les blocs polyéthers (blocs PE) peuvent représenter 5 à 85 % en poids du copolymère à blocs polyamides et polyéthers. Les blocs polyéthers sont constitués de motifs oxyde d'alkylène. Ces motifs peuvent être par exemple des motifs oxyde d'éthylène, des motifs oxyde de propylène, des motifs triméthylène éther (De tels copolymères avec des blocs polytriméthylène éther sont décrits dans le brevet US 6590065), ou tétrahydrofurane (qui conduit aux enchaînements polytétraméthylène glycol). On utilise ainsi des blocs PEG c'est à dire ceux constitués de motifs oxyde d'éthylène, des blocs PPG c'est à dire ceux constitués de motifs oxyde de propylène, des blocs polytriméthylène éther et des blocs PTMG c'est à dire ceux constitués de motifs tétraméthylène glycols appelés aussi polytétrahydrofurane. Les copolymères PEBA peuvent comprendre dans leur chaîne plusieurs types de polyéthers. On peut encore citer les copolyéthers à blocs ou statistiques. La quantité de blocs polyéther dans ces copolymères PEBA est avantageusement de 10 à 70% en poids du copolymère et de préférence de 35 à 60%.

Les blocs polyétherdiols sont soit utilisés tels quels et copolycondensés avec des blocs polyamides à extrémités carboxyliques, soit aminés pour être transformés en polyéther diamines et condensés avec des blocs polyamides à extrémités carboxyliques. Ils peuvent être aussi mélangés avec des précurseurs de polyamide et un limiteur de chaîne diacide pour faire les polymères à blocs polyamides et blocs polyéthers ayant des motifs répartis de façon statistique.

La masse molaire en nombre *M̅n̅* des séquences polyamides peut être comprise entre 500 et 10000 et de préférence entre 500 et 6000. La masse *M̅n̅* des séquences polyéther peut être comprise entre 100 et 6000 et de préférence entre 200 et 3000.

Ces polymères PEBA qu'ils proviennent de la copolycondensation de séquences polyamides et polyéthers préparées auparavant ou d'une réaction en une étape, présentent, par exemple, une viscosité intrinsèque entre 0,8 et 2,5 mesurée dans le métacrésol à 25°C pour une concentration initiale de 0,5g pour 100g ou 0,8 g/100 ml. La préparation de ces copolymères est décrite dans l'art antérieur. On peut citer par exemple les brevets WO 04 037898, EP 1262527, EP 1270211, EP 1136512, EP 1046675, EP 1057870, EP 1155065, EP 506495 et EP 504058.

L'invention est particulièrement utile pour les polymères PEBA ayant des blocs PA en PA 12, en PA 11 ou en PA 6 et des blocs PE en PTMG, en PEG ou en PPG. Les blocs polyamides peuvent être des copolyamides.

S'agissant de l'antioxydant phénolique (a), on peut citer à titre d'exemple l'Irganox® 1010, l'Irganox® 1098 et l'Irganox®245. Ce sont des phénols encombrés.

S'agissant de l'antioxydant de type phosphite ou à base de soufre (b), on peut citer à titre d'exemple ADK STAB® PEP 36, ADK STAB® PEP8HT d'Adeka Palmarole et Doverphos® 9228 de Dover Chemical.

S'agissant de l'absorbeur UV (c), on peut citer à titre d'exemple Tinuvin ®320, Tinuvin®350, Tinuvin®312 de CIBA .

S'agissant du stabilisant lumière de type amine encombrée abrégé HALS (d), sa teneur dans la composition finale doit être relativement faible pour limiter l'impact négatif sur le YI lors de tests thermiques ou pour limiter l'interaction avec des phénols encombrés.

On peut citer comme HALS N-méthylée le Tinuvin®765 et le Tinuvin®144 de CIBA, l'ADK STAB®LA52 de Adeka Palmarole et le Chimasorb®119 de CIBA. On peut citer comme HALS non N-méthylées le Tinuvin®770 de CIBA et le Nylostab®SEED de Clariant. Pour la composition selon l'invention, un HALS N-méthylé est plus efficace qu'un HALS non N-méthylé.

La masse du HALS (entre 500 et 1000g/mol) peut ne pas être trop élevée pour que ce dernier puisse migrer en surface. Cependant, dans le cas d'une matrice transparente, la masse du HALS peut être plus élevée puisqu'il doit être présente partout et donc n'a pas à migrer.

Tous ces additifs sont décrits dans "Stabilization of Polymeric Materials" Author: Zweifel, H.1998 Springer-Verlag Berlin Heidelberg New York ISBN: 354061690X.

Les compositions de copolymères PEBA peuvent contenir, en plus des additifs précédents, des plastifiants, des charges, des colorants.

On a utilisé un copolymère à blocs polyamides de type PA 12 et blocs polyéthers de type PTMG, nommé PEBA 1 auquel différentes combinaisons d'additifs (a) à (d) ont été ajoutées à l'état fondu, à diverses teneurs pour fabriquer les compositions M1 à M11 du **tableau 1** ci-dessous (M10 et M11 étant des exemples selon la présente invention). Les proportions d'additifs dans le **tableau 1** sont exprimées en parties pour 10⁶ parties de mélange total (PEBA+additifs). Les différentes compositions ont ensuite été testées pour leur résistance à la thermo-oxydation et à la photo-oxydation.

Dans le premier cas (thermo-oxydation), des plaques de (100*100*1) mm³ ont été placées dans une étuve à 90 °C et l'évolution de la coloration a été mesurée. Pour cela, on mesure le YI de plaques de compositions M1, M2, M4, M6, M7, M8 (voir graphes 1 et 2) avec les paramètres suivants : illuminant D 65 / observateur 10°.

Dans le second cas (photo-oxydation), des plaques de (100*100*1) mm³ ont été placées dans une enceinte SEPAP® 12.24 et le temps nécessaire à l'apparition de craquelure en surface est mesuré, ce temps est désigné par "résistance UV" dans le **tableau 1.**

Les graphes 1 et 2 ci-dessous montrent l'évolution du Yellow Index abrégé YI (en ordonnée) des compositions M1 à M11 au cours de 2 tests réalisés séparément en fonction du temps d'exposition exprimé en jours. Sur le graphe 1, on a représenté successivement de gauche à droite le YI à t₀ (temps initial), t₀ + 7 jours, t₀ + 14 jours, t₀ + 21 jours et t₀ + 34 jours pour chaque composition M au cours d'un premier test. Sur le graphe 2, on a représenté successivement de gauche à droite le YI à t₀ (temps initial), t₀ + 7 jours, t₀ + 14 jours, t₀ + 21 jours et t₀ + 30 jours pour chaque composition M au cours d'un second test.

On observe que la réduction de la teneur en HALS (voir M9 vs. M5) permet de diminuer l'évolution du YI. Toutefois, l'utilisation de HALS méthylé (M8, M10 et M11) ou l'absence de HALS (M3, M7) est encore plus efficace pour limiter l'évolution du YI. Mais, le Tableau 1 montre que pour maintenir une bonne résistance UV, la présence de HALS est nécessaire, d'où le bon compromis entre résistance UV et indice de jaune obtenu en utilisant un HALS N-méthylé.

**Tableau 1**

| **Compositions** | **M1** | **M2** | **M3** | **M4** | **M5** | **M6** | **M7** | **M8** | **M9** | **M10** | **M11** |
|---|---|---|---|---|---|---|---|---|---|---|---|
| Irganox®1010 | 2000 | 3700 | 5000 | 5400 | 5400 | 5400 | 5400 | 5400 | 5400 | 5400 | 5400 |
| Tinuvin®320 | | | 5000 | | | | | | | | |
| Tinuvin®350 | | 1500 | | | | | | | | | |
| Tinuvin®312 | | | | 5000 | 1500 | 5000 | 5000 | 5000 | 1500 | 1500 | 1500 |
| Tinuvin®770 | | 1500 | | 1000 | 1000 | | | | 500 | | |
| Tinuvin®144 | | | | | | | | | | 500 | |
| Chimasorb® 119 | | | | | | | | 1000 | | | |
| Nylostab®SEED | | | | | | 1000 | | | | | |
| ADK STAB®LA52 | | | | | | | | | | | 500 |
| ADK STAB®PEP36 | | | | 1500 | 1500 | 1500 | 1500 | | 1500 | 1500 | 1500 |
| ADK STAB®PEP8HT | | 2000 | | | | | | | | | |
| Doverphos 9228 | | | | | | | | 1500 | | | |
| **Résistance UV (h)** | **160** | **> 1800** | **400** | **> 1800** | **> 1800** | | **190** | | **1300** | **800** | **700** |

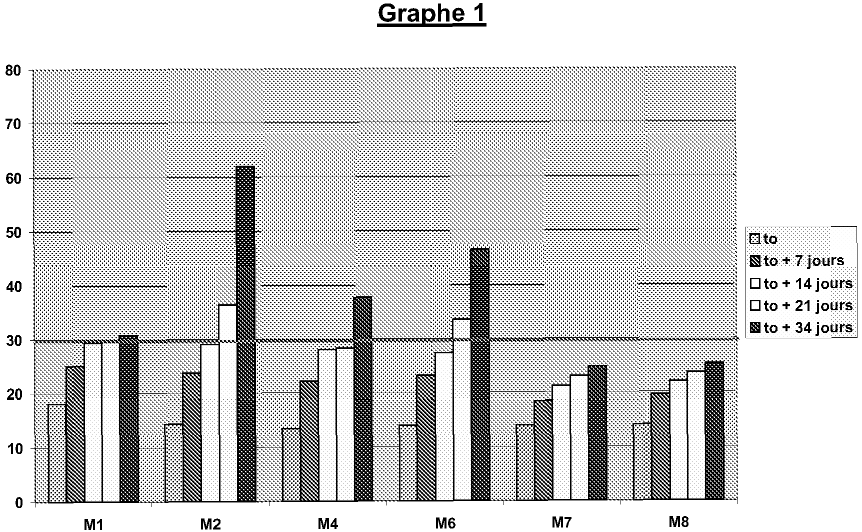

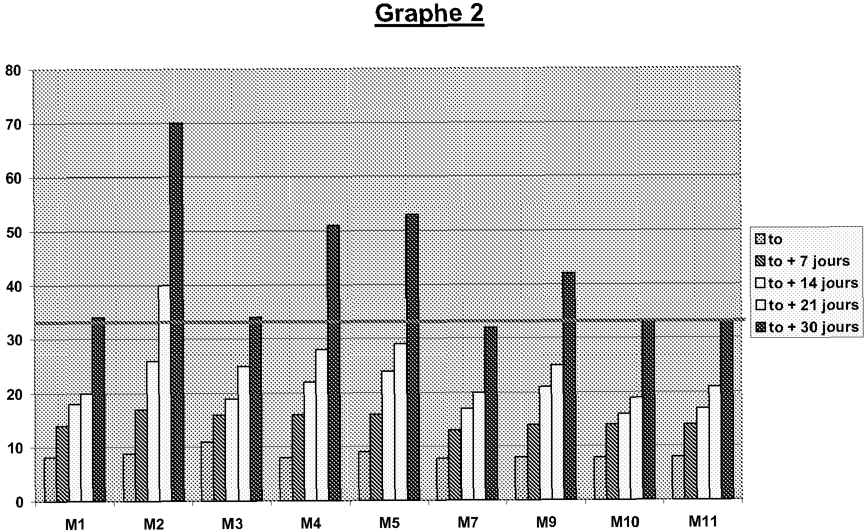

## Revendications

1. Composition de copolymère à blocs polyamides (blocs PA) homo ou copolyamide, à l'exclusion des blocs PA complètement aromatiques, et à blocs polyéthers comprenant :
(a) 3000 à 8000 ppm d'au moins un antioxydant phénolique;
(b) 1000 à 2 000 ppm d'au moins un antioxydant à base de phosphore ou à base de soufre;
(c) 1000 à 2 000 ppm d'au moins un absorbeur UV;
(d) 300 à 2 000 ppm d'au moins un stabilisant lumière de type amine encombrée ou HALS, N-méthylé ;
ppm signifiant parties par million de composition totale.

2. Composition selon l'une quelconque des revendications précédentes, **caractérisée en ce que** la proportion de HALS N-méthylé est de 400 à 1 000 ppm.

3. Composition selon l'une quelconque des revendications précédentes, **caractérisée en ce que** la proportion de (b) est comprise entre 1200 et 1700 ppm.

4. Composition selon l'une quelconque des revendications précédentes, **caractérisée en ce que** la proportion de (c) est comprise entre 1200 et 1700.

5. Composition selon l'une quelconque des revendications précédentes, **caractérisée en ce que** les blocs polyamide sont des blocs de PA 12, PA 11 ou PA 6 et les blocs polyéthers sont des blocs PTMG, PEG ou PPG.

6. Article comprenant une composition selon l'une des revendications précédentes.

7. Utilisation d'une composition selon l'une des revendications 1 à 16 pour fabriquer une semelle de chaussure.

## Patentansprüche

1. Zusammensetzung von Copolymer mit Homo- oder Copolyamid-Polyamidblöcken (-PA-Blöcken) mit Ausnahme von vollaromatischen PA-Blöcken und Polyetherblöcken, umfassend:
(a) 3000 bis 8000 ppm mindestens eines phenolischen Antioxidans;
(b) 1000 bis 2000 ppm mindestens eines Antioxidans auf Basis von Phosphor oder auf Basis von Schwefel;
(c) 1000 bis 2000 ppm mindestens eines UVabsorbers;
(d) 300 bis 2000 ppm mindestens eines Lichtschutzmittels vom Typ N-methyliertes gehindertes Amin oder HALS;
wobei ppm Teile pro Million der Gesamtzusammensetzung bedeutet.

2. Zusammensetzung nach einem der vorhergehenden Ansprüche, **dadurch gekennzeichnet, dass** der Anteil an N-methyliertem HALS 400 bis 1000 ppm beträgt.

3. Zusammensetzung nach einem der vorhergehenden Ansprüche, **dadurch gekennzeichnet, dass** der Anteil an (b) zwischen 1200 und 1700 ppm liegt.

4. Zusammensetzung nach einem der vorhergehenden Ansprüche, **dadurch gekennzeichnet, dass** der Anteil an (c) zwischen 1200 und 1700 liegt.

5. Zusammensetzung nach einem der vorhergehenden Ansprüche, **dadurch gekennzeichnet, dass** es sich bei den Polyamidblöcken um PA-12-, PA-11- oder PA-6-Blöcke handelt und es sich bei den Polyetherblöcken um PTMG-, PEG- oder PPG-Blöcke handelt.

6. Gegenstand, umfassend eine Zusammensetzung nach einem der vorhergehenden Ansprüche.

7. Verwendung einer Zusammensetzung nach einem der Ansprüche 1 bis 16 zur Herstellung einer Schuhsohle.

## Claims

1. Copolymer composition, the copolymer having homo- or copolyamide polyamide blocks (PA blocks), with the exclusion of completely aromatic PA blocks, and having polyether blocks, comprising:
(a) from 3000 to 8000 ppm of at least one phenolic antioxidant;
(b) from 1000 to 2000 ppm of at least one phosphorus-based antioxidant or sulfur-based antioxidant;
(c) from 1000 to 2000 ppm of at least one UV absorber;
(d) from 300 to 2000 ppm of at least one N-methylated hindered amine light stabilizer or HALS;
ppm meaning parts per million of total composition.

2. Composition according to any one of the preceding claims, **characterized in that** the proportion of N-methylated HALS is from 400 to 1000 ppm.

3. Composition according to either one of the preceding claims, **characterized in that** the proportion of (b) is between 1200 and 1700 ppm.

4. Composition according to any one of the preceding claims, **characterized in that** the proportion of (c) is between 1200 and 1700.

5. Composition according to any one of the preceding claims, **characterized in that** the polyamide blocks are PA 12, PA 11 or PA 6 blocks and the polyether blocks are PTMG, PEG or PPG blocks.

6. Article comprising a composition according to one of the preceding claims.

7. Use of a composition according to one of Claims 1 to 16 for manufacturing a footwear sole.
